# EUROPÄISCHE PATENTANMELDUNG

(11) **EP 3 210 862 A1**
(43) Veröffentlichungstag der Anmeldung: **30.08.2017**
(21) Anmeldenummer: 16157611.1
(22) Anmeldetag: 26.02.2016
(51) Int. Cl.: B62D 33/04

(54) **PANEEL UND AUFBAU EINES NUTZFAHRZEUGS MIT EINEM RANDPROFIL UND EINEM DARAN FESTGELEGTEN MONTAGEPROFIL**

(71) Anmelder: Schmitz Cargobull AG, 48341 Altenberge (DE)
(72) Erfinder: Westhoff, Ludger, 46354 Südlohn (DE)
(74) Vertreter: Cohausz & Florack

(57) **Zusammenfassung**

Beschrieben und dargestellt ist ein Paneel (11) für einen Aufbau (2) eines Nutzfahrzeugs, insbesondere Lastkraftwagens, Anhängers oder Sattelaufliegers, mit zwei Decklagen (20) und einer dazwischen vorgesehenen Kernlage (21), wobei an wenigstens einer Schmalseite des Paneels (11) ein sich in Längsrichtung der Schmalseite erstreckendes Randprofil (22) vorgesehen ist. Um die Fertigung des Paneels schneller und kostengünstiger bewerkstelligen zu können, ist vorgesehen, dass auf der der Kernlage (21) zugewandten Seite des Randprofils (22) ein Montageprofil (23) zur Montage wenigstens einer, vorzugsweise elektrischen, Leitung (24) im Paneel (11) mit dem Randprofil (22) verbunden ist.

## Beschreibung

Die Erfindung betrifft ein Paneel für einen Aufbau eines Nutzfahrzeugs, insbesondere Lastkraftwagens, Anhängers oder Sattelaufliegers, mit zwei Decklagen und einer dazwischen vorgesehenen Kernlage, wobei an wenigstens einer Schmalseite des Paneels ein sich in Längsrichtung der Schmalseite erstreckendes Randprofil vorgesehen ist. Ferner betrifft die Erfindung einen Aufbau eines Nutzfahrzeugs, insbesondere Lastkraftwagens, Anhängers oder Sattelaufliegers, mit einem Paneel der genannten Art.

Nutzfahrzeuge der vorgenannten Art können beispielsweise Lastkraftwagen, Anhänger und Sattelauflieger sein. Dabei sind die Nutzfahrzeuge insbesondere für den Transport von Gütern, wie Stückgütern, im öffentlichen Straßenverkehr vorgesehen. Zu diesem Zweck weisen die Nutzfahrzeuge unterschiedliche Arten von Aufbauten auf, welche Laderäume zur Aufnahme der zu transportierenden Güter bereitstellen. Es sind beispielsweise sogenannte Planenaufbauten bekannt, welche wenigstens eine Plane zum Verschließen wenigstens einer Seite und/oder des Dachs des Planenaufbaus aufweisen. Wenn die Plane entlang der Seitenwand verschoben werden kann, spricht man auch von sogenannten Curtainsidern.

Bei sogenannten Kofferaufbauten sind dagegen die Seitenwände und das Dach durch feste Wände verschlossen. Auch die Stirnwand ist bei Kofferaufbauten typischerweise als feste Wand ausgebildet, während die Rückwand meist aus zwei Flügeltüren, einem Rolltor oder dergleichen gebildet wird, um den Kofferaufbau von hinten beladen zu können. Die Seitenwände, das Dach und die Stirnwand von Kofferaufbauten sind in der Regel in Form von mehrschichtigen Paneelen aufgebaut, die eine innere strukturgebende Decklage, eine äußere strukturgebende Decklage und eine Kernlage aus einem geschäumten Kunststoff umfassen. Die Decklagen können selbst jeweils mehrlagig ausgebildet sein und dienen der Aussteifung der Paneele, weshalb die Decklagen meist wenigstens eine Schicht aus einem Metall und/oder einem faserverstärkten Kunststoff aufweisen. Da die Kofferaufbauten geschlossen sind und infolge der Kernlage aus geschäumtem Kunststoff eine hohe thermische Isolation bereitstellen, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet.

Die Kernlage kann beispielsweise zunächst geschäumt und dann in Form einzelner Elemente oder Kunststoffblöcke zwischen den Decklagen des Paneels positioniert werden. Es kann aber auch der noch nicht ausgehärtete Kunststoff zwischen die Decklagen des Paneels geleitet werden, der das Innere des Paneels wenigstens zum Teil ausschäumt. Um die Kernlage gegen äußere Einwirkungen, insbesondere das Eindringen von Feuchtigkeit in den geschäumten Kunststoff, zu schützen, weisen die bekannten Paneele regelmäßig an den Rändern der Decklagen umlaufende Randprofile auf, die mit den Rändern der Decklagen verbunden sein können, um so die Schmalseiten des Paneels zu verschließen. Dies ist insbesondere für durch Kunststoff ausgeschäumte Paneele der Fall. Durch die vor dem Ausschäumen vorgesehenen Randprofile können die Decklagen im gewünschten Abstand zueinander positioniert werden. Außerdem verhindern die Randprofile das Austreten von Kunststoff an den entsprechenden Schmalseiten der zu fertigenden Paneele. Die Randprofile und die Decklagen können mithin die Form für den auszuschäumenden Kunststoff bilden, der den darin verbleibenden Freiraum nach dem Schäumen mehr oder weniger vollständig ausfüllen kann.

Einige Kofferaufbauten weisen beispielsweise elektrische Einrichtungen auf, etwa um den Laderaum auszuleuchten, eine Konturbeleuchtung an der Außenseite des Aufbaus anzubringen und/oder eine Spannungsversorgung für im Laderaum des Kofferaufbaus anzuschließende elektrische Verbraucher sicherzustellen. Für die entsprechende Ausrüstung eines Aufbaus müssen folglich elektrische Leitungen verlegt werden, die auch als Kabel bezeichnet werden können. Werden die elektrischen Leitungen an den Decklagen montiert, können die Leitungen leicht beschädigt werden und unter Umständen das Be- und Entladen des Aufbaus behindern. Daher werden die elektrischen Leitungen vorzugsweise innerhalb des Paneels verlegt, wo die elektrischen Leitungen gegen äußere Einflüsse geschützt sind. Dort, wo dies für die gewünschte Anwendung erforderlich ist, können die elektrischen Leitungen bedarfsweise durch eine Decklage zur Außenseite oder in den Laderaum des Aufbaus geführt werden.

Das Verlegen der elektrischen Leitungen bzw. Kabel in Paneelen von Aufbauten ist recht umständlich und damit zeit- und kostenintensiv. Dies gilt insbesondere für Paneele die zur Bildung der Kernlage ausgeschäumt werden. Dann müssen die Leitungen nämlich aufwendig an wenigstens einer Decklage oder bedarfsweise auch beiden Decklagen vormontiert werden. Die Decklagen werden dann bedarfsweise mit wenigstens einem Randprofil zu einer Form zusammengesetzt und der verbleibende Innenraum wenigstens zum großen Teil ausgeschäumt. Wird das Paneel nicht ausgeschäumt, müssen die bereits geschäumten Elemente bzw. Kunststoffblöcke in geeigneter Form gebildet oder vor dem Einbringen der elektrischen Leitungen mit Aussparungen zur Aufnahme der elektrischen Leitungen versehen werden. Auch dies ist mit einem erhöhten Zeit- und Arbeitsaufwand verbunden, was sich nachteilig auf die Fertigungskosten der Paneele auswirkt.

Daher liegt der vorliegenden Erfindung die Aufgabe zugrunde, das Paneel und den Aufbau jeweils der eingangs genannten und zuvor näher erläuterten Art derart auszugestalten und weiterzubilden, dass die Fertigung des Paneels und des Aufbaus einfacher, schneller und kostengünstiger erfolgen kann.

Diese Aufgabe ist bei einem Paneel nach dem Oberbegriff des Anspruchs 1 dadurch gelöst, dass auf der der Kernlage zugewandten Seite des Randprofils ein Montageprofil zur Montage wenigstens einer, vorzugsweise elektrischen, Leitung im Paneel mit dem Randprofil verbunden ist.

Ferner ist die Aufgabe bei einem Aufbau nach dem Oberbegriff von Anspruch 13 dadurch gelöst, dass auf der der Kernlage zugewandten Seite des Randprofils ein Montageprofil zur Montage wenigstens einer, vorzugsweise elektrischen, Leitung im Paneel mit dem Randprofil verbunden ist und dass das Randprofil mit einem weiteren Paneel und/oder einem Anbauteil des Aufbaus verbunden ist.

Erfindungsgemäß lässt sich eine Vereinfachung der Fertigung des Paneels erreichen, wenn das Paneel mit einem weiteren Profil ausgerüstet wird, und zwar einem Montageprofil zur Montage wenigstens einer Leitung. Dies erfordert zwar die Montage des Montageprofils zusätzlich zu der Leitung. Allerdings kann das Montageprofil bei geeigneter Ausgestaltung sehr einfach und schnell über eine geeignete Verbindung mit dem Randprofil verbunden werden, so dass bedarfsweise das Randprofil das Montageprofil in Position halten kann. Zudem kann dann die Leitung einfach und schnell am Montageprofil festgelegt werden. Das Montageprofil ist nämlich genau für diesen Zweck vorgesehen und, kann somit gezielt für eine einfache und schnelle Montage einer bedarfsweise vorbestimmten Art von Leitung ausgebildet sein. Der Abschluss der entsprechenden Schmalseite des Paneels und die Anbindung an die Decklagen muss dagegen nicht durch das Montageprofil übernommen werden. Somit müssen auch keine Elemente am Montageprofil vorgesehen werden, welche diese Funktionalitäten ermöglichen. Die entsprechenden Funktionalitäten werden bedarfsweis bereits durch das Randprofil bereitgestellt. Es kann also ausreichen, wenn das Montageprofil zur, insbesondere einfachen, Verbindung mit dem Randprofil einerseits und zur einfachen, beispielsweise formschlüssigen, Festlegung der wenigstens einen Leitung andererseits ausgebildet ist.

Da das Montageprofil auf der Innenseite des Randprofils, also in Richtung der Kernlage vorgesehen ist, bleibt der äußere Abschluss des Paneels an der entsprechenden Schmalseite unbeeinflusst von dem Montageprofil. Das Paneel kann also in immer gleicher Weise mit weiteren Bauteilen zu einem Aufbau, insbesondere Kofferaufbau, eines Nutzfahrzeus zusammengesetzt werden. Im Übrigen kann das Montageprofil sowohl zum Verlegen von elektrischen Leitungen, also im Wesentlichen Kabeln, als bedarfsweise auch von Leitungen zum Transport von Fluiden, also Gasen und/oder Flüssigkeiten, vorgesehen sein. Die Verwendung von elektrischen Leitungen ist regelmäßig bevorzugt, weil die Aufbauten insbesondere mit elektrischen Verbrauchern versehen werden sollen oder müssen. Es ist alternativ oder zusätzlich aber auch möglich, Leitungen für Fluide an dem wenigstens einen Montageprofil festzulegen. Auf diese Weise können beispielsweise Hydraulik- oder Pneumatikeinheiten mit beispielsweise Hydrauliköl oder Druckluft versorgt werden. Grundsätzlich kommen als Leitungen für Fluide auch Schläuche in Frage, da sich diese in der Regel leichter verlegen und mit dem Montageprofil verbinden lassen.

Bei einer ersten besonders bevorzugten Ausgestaltung des Paneels weist das Montageprofil zwischen seinen Längsenden wenigstens einen Kanal zur Aufnahme der wenigstens einen, vorzugsweise elektrischen, Leitung auf. Dann kann die Leitung durch den Kanal geführt und dadurch sehr einfach am Paneel, insbesondere dem Montageprofil festgelegt werden. Außerdem besteht so die Möglichkeit, die wenigstens eine Leitung nachträglich zu montieren oder auszutauschen, etwa wenn ein Defekt auftritt oder wenn das Nutzfahrzeug an einen anderen Einsatzzweck angepasst werden soll. Alternativ oder zusätzlich kann der Querschnitt des Kanals so bemessen sein, dass sich nachträglich noch wenigstens eine weitere, insbesondere elektrische, Leitung im Kanal und damit im Paneel montieren lässt. Zur Montage der wenigstens einen Leitung muss der Kanal nicht unbedingt vollständig geschlossen sein, so lange die wenigstens eine Leitung ohne Weiteres im Kanal gehalten wird. Es kann aber dennoch bevorzugt sein, dass der Kanal geschlossen ist, so dass beim Ausschäumen des Paneels der ausschäumende Kunststoff nicht versehentlich in den Kanal eindringt und so den freien Kanalquerschnitt übermäßig verengt. Dann wäre eine Montage oder ein Austausch einer Leitung erschwert oder gar behindert.

Um eine einfach herzustellende und zuverlässige Verbindung zwischen dem Montageprofil und dem Randprofil bereitzustellen, kann das Montageprofil formschlüssig, stoffschlüssig und/oder kraftschlüssig mit dem Randprofil verbunden sein. Stoffschlüssige Verbindungen lassen sich beispielsweise einfach und schnell durch Verkleben oder Verschweißen herstellen, während eine kraftschlüssige Verbindung durch Verklemmen oder Verschrauben bereitgestellt werden kann. In vielen Fällen wird die Verbindung zwischen dem Montageprofil und dem Randprofil keinen besonders hohen Kräften standhalten müssen, so dass insbesondere eine einfache Fertigung der Verbindung im Vordergrund steht.

Um das Montageprofil einfach, schnell und zuverlässig durch eine formschlüssige und/oder kraftschlüssige Verbindung mit dem Randprofil zu verbinden, bietet sich eine Nut/Feder-Verbindung und/oder eine Rastverbindung an. Zusätzlich kann auch noch eine stoffschlüssige Verbindung vorgesehen sein, um das Montageprofil und das Randprofil dauerhaft zu verbinden. Entsprechende Verbindungen bedürfen insbesondere keines weiteren Werkzeugs zum Fügen der Verbindungen. Außerdem können diese Verbindungen in einem Schritt hergestellt werden. Mehrere Arten der Verbindungen können bedarfsweise miteinander kombiniert werden. So bietet es sich beispielsweise zur positionsgenauen Verbindung an, wenn eine Nut/Feder-Verbindung mit wenigstens einem Verriegelungsvorsprung und wenigstens einer korrespondierenden Aufnahme versehen ist, um beim Fügen der Nut/Feder-Verbindung eine Rastverbindung bereitzustellen. Alternativ oder zusätzlich kann in einer Nut/Feder-Verbindung ein Klebstoff zur stoffschlüssigen Verbindung beim Fügen der Nut/Feder-Verbindung vorgesehen sein. Im Falle einer Nut/Feder-Verbindung kann das Randprofil prinzipiell das Nutprofil oder aber das Federprofil aufweisen. Es kann auch vorgesehen sein, dass das Randprofil wenigstens ein Nutprofil und/oder wenigstens ein Federprofil aufweist, was die Komplexität der Verbindung und damit des Randprofils erhöht und insoweit eher weniger bevorzugt sein wird. Grundsätzlich ist es aber gleichfalls bevorzugt, wenn das Randprofil wenigstens ein Nutprofil aufweist. Das Nutprofil kann nämlich alternativ zur Aufnahme eines Federprofils des Montageprofils auch der Aufnahme weiterer Elemente dienen. Auf ein Beispiel einer entsprechenden Aufnahme wird nachfolgend noch eingegangen.

Um in einfacher Weise mehrere Montageprofile an einem Randprofil festlegen zu können, können die Montageprofile an einer Längsseite ein Federprofil und auf der gegenüberliegenden Längsseite ein mit dem Federprofil derart korrespondierendes Nutprofil aufweisen, so dass gleichartige Montageprofile jeweils über ein Federprofil und ein Nutprofil unter Ausbildung einer Nut/Feder-Verbindung verbindbar sind. Das zweite und jedes weitere Montageprofil wird dann indirekt mit dem Randprofil verbunden, und zwar über wenigstens ein weiteres Montageprofil. Beispielsweise kann ein erstes Montageprofil über eine Nut/Feder-Verbindung mit dem Randprofil und ein zweites Montageprofil über eine Nut/Feder-Verbindung mit dem ersten Montageprofil verbunden sein. Die Montageprofile können also bedarfsweise ineinander gesteckt und so in einer Reihe angeordnet werden, in der die Mehrzahl von Montageprofilen mit einem endständigen Montageprofil mit dem Randprofil verbunden. Zu diesem Zweck bietet es sich besonders an, wenn das Randprofil und das Montageprofil jeweils an einer Längsseite gleichartige Federprofile oder gleichartige Nutprofile aufweisen. So können für die Verbindungen der Montageprofile untereinander und für die Verbindung eines Montageprofils mit einem Randprofil wenigstens im Wesentlichen gleichartige, wenn nicht gar identische Nut/Feder-Verbindungen verwendet werden.

Unabhängig von der Ausgestaltung der Verbindung, kann das mit dem Randprofil verbundene Montageprofil auf der dem Randprofil abgewandten Längsseite formschlüssig, kraftschlüssig und/oder stoffschlüssig mit einem weiteren Montageprofil verbunden sein. Die Verbindung kann der Einfachheit halber analog zur Verbindung zwischen dem Randprofil und dem daran angrenzenden Montageprofil ausgebildet sein. Zwingend ist dies jedoch nicht. Grundsätzlich können so modular mehrere Montageprofile mit dem einen Randprofil verbunden werden. Dies kann dann zweckmäßig sein, wenn mehrere Leitungen, die elektrische Leitungen sein können aber nicht müssen, im Paneel verlegt werden sollen. Dann kann jede Leitung an einem Montageprofil festgelegt werden. Grundsätzlich kann jedes Montageprofil, insbesondere der von den Montageprofilen jeweils gebildete Kanal zur Aufnahme und/oder zur Befestigung einer Mehrzahl von Leitungen ausgebildet sein. Allerdings ist es möglich, dass mehr Leitungen im Paneel verlegt werden sollen, als von einem Montageprofil aufgenommen oder gehalten werden können. Dann kann ein weiteres Montageprofil formschlüssig, kraftschlüssig und/oder stoffschlüssig mit dem ersten Montageprofil verbunden werden. Um die Verbindbarkeit der Montageprofile untereinander zu gewährleisten, Verwechslungen zu vermeiden, sowie die Herstellungskosten insgesamt zu senken, ist es dabei besonders bevorzugt, wenn die Montageprofile wenigstens im Wesentlichen gleichartig ausgebildet sind.

Alternativ oder zusätzlich können einerseits die beiden Montageprofile und andererseits das Randprofil mit dem angrenzenden Montageprofil über wenigstens im Wesentlichen gleichartige Verbindungen, insbesondere Nut/Feder-Verbindungen, Rastverbindungen und/oder stoffschlüssige Verbindungen, verbunden sein. Dies ermöglicht eine große Flexibilität bei der Verbindung der Profile untereinander. Andererseits erlaubt dies einen modularen Aufbau zu geringen Herstellungskosten.

Bei einem besonders bevorzugten Paneel ist die Kernlage aus einem geschäumten Kunststoff gebildet. Dies ermöglicht eine gute thermische Isolierung und zugleich ein stabiles und leichtes Paneel. Dabei ist es weiter bevorzugt, wenn sich der geschäumte Kunststoff der Kernlage bis in eine Aufnahme, insbesondere in ein Nutprofil, des an die Kernlage angrenzenden Montageprofils und/oder Randprofils erstreckt. Dann kann das Randprofil, sofern es nicht mit dem Montageprofil verbunden ist, nicht nur an die Decklagen, sondern auch an die Kernlage angebunden werden, was der Stabilität und der Langlebigkeit des Profils zugute kommen kann. Im Falle eines Montageprofils kann dieses sowohl mit dem Randprofil als auch mit der Kernlage verbunden sein. Das Montageprofil ist dann besonders sicher gehalten. Wenn zudem in der Aufnahme des Montageprofils und/oder des Randprofils wenigstens eine Hinterschneidung vorgesehen ist, kann die Kernlage die Hinterschneidung in einer Richtung beispielsweise parallel zu den Decklagen und senkrecht zu dem entsprechenden Profil formschlüssig hintergreifen. Die Verbindung des entsprechenden Profils mit dem restlichen Paneel ist dann sehr fest und stabil.

Alternativ oder zusätzlich kann das Randprofil mit den Decklagen stoffschlüssig verbunden sein, was sich aufgrund der entsprechenden Werkstoffpaarungen besonders einfach und zuverlässig durch ein Verkleben erreichen lässt. Die stoffschlüssige Verbindung sorgt dafür, dass das Randprofil einfach montiert und dauerhaft zuverlässig in Position gehalten wird.

Um die Fertigungskosten gering zu halten, kann das Randprofil und/oder das Montageprofil aus Kunststoff, vorzugsweise aus Polyvinylchlorid (PVC), gebildet werden. Der Einfachheit halber wird das entsprechende Profil als Extrusionsprofil gebildet. Wenigstens eine Decklage kann aus einem Metall, vorzugsweise Stahl oder Aluminium, oder aus einem Kunststoff, vorzugsweise faserverstärktem Kunststoff gefertigt sein. Dies ist kostengünstig und bietet mechanische Vorteile, etwa hinsichtlich der Steifigkeit. Grundsätzlich kann es aber ausreichen, wenn eine Decklage eine Strukturlage aus einem Metall, vorzugsweise Stahl oder Aluminium, oder aus einem Kunststoff, vorzugsweise faserverstärktem Kunststoff, aufweist. Weitere Lagen der wenigstens einen Decklage können dann aus anderen Materialien bereitgestellt werden, um die gewünschten Eigenschaften bereitzustellen.

Um die Verbindbarkeit des Paneels mit weiteren Paneelen oder anderen Bauteilen des Aufbaus zu verbessern, kann das Randprofil als Verbindungsprofil zur Bildung einer formschlüssigen Verbindung, Rastverbindung und/oder stoffschlüssigen Verbindung, insbesondere mit einem korrespondierenden Verbindungsprofil eines weiteren Paneels und/oder Anbauteils ausgebildet sein. Das Randprofil kann so weitere Funktionalitäten aufweisen und bedarfsweise weitere Bauteile entbehrlich machen, die diese weiteren Funktionalitäten ansonsten übernehmen würden. Letztlich kann beispielsweise erreicht werden, dass das Paneel mit einer sehr geringen Anzahl an Einzelteilen gebildet wird, die untereinander zudem möglichst oft wenigstens im Wesentlichen gleichartig ausgebildet sein können.

Das Randprofil kann beispielsweise wenigstens zwei Nuten und wenigstens eine Feder zur Verbindung mit einem korrespondierenden Verbindungsprofil aufweisen. Dies erlaubt eine sehr genaue und feste Verbindung, die sich zudem kostengünstig herstellen lässt. Alternativ oder zusätzlich kann das Randprofil wenigstens einen Rastvorsprung zum Verrasten mit einem korrespondierenden Verbindungsprofil aufweisen. Auf diese Weise kann sehr einfach eine Rastverbindung geschaffen werden, die sich sehr schnell und unproblematisch fügen lässt.

Um einfach und zuverlässig eine Verbindung bereitstellen zu können, kann das Randprofil und/oder das Montageprofil wenigstens eine Aufnahme und/oder einen Halteabschnitt, insbesondere in Form eines Federprofils, mit wenigstens einem Rastvorsprung zum formschlüssigen Hintergreifen eines Rastvorsprungs eines Montageprofils und/oder des Randprofils in einer Richtung senkrecht zum Randprofil und/oder Montageprofil und parallel zu den Decklagen aufweisen. Die Zuordnung der Aufnahme und des Halteabschnitts bzw. Federprofils zu dem Randprofil und/oder dem Montageprofil ist daher grundsätzlich wählbar. Allerdings wird durch die zuvor beschriebene Ausgestaltung erreicht, das das Randprofil und das wenigstens eine Montageprofil untereinander einfach und zuverlässig verbunden werden können. Dies gilt dabei umso mehr, wenn wenigstens zwei seitliche Rastvorsprünge in einer Aufnahme und/oder an einem Halteabschnitt bzw. Federprofil vorgesehen sind. Die jeweiligen Rastvorsprünge können einander grundsätzlich hintergreifen, um auf diese Weise eine Rastverbindung zwischen einem Randprofil und einem Montageprofil oder zwischen zwei Montageprofilen zu bilden.

Hinsichtlich des Aufbaus ist es weiter bevorzugt, wenn das Randprofil durch eine formschlüssige Verbindung, eine Rastverbindung und/oder über eine stoffschlüssige Verbindung mit einem weiteren Paneel und/oder einem Anbauteil verbunden ist. So lässt sich sehr einfach, schnell und kostengünstig ein Aufbau zusammensetzen. Unter einem Anbauteil kann beispielsweise der Rückwandrahmen oder ein Teil davon verstanden werden. Es kann aber auch mit einem Anbauteil ein weiteres Paneel verbunden sein, so dass über ein Anbauteil zwei angrenzende Paneele, etwa über Eck, miteinander verbunden werden können. Das Anbauteil kann bedarfsweise aber auch ein Teil des Bodens des Aufbaus sein. Letztlich kommen als Anbauteile grundsätzlich alle Teile eines Aufbaus in Frage, mit denen ein Paneel desselben zu verbinden ist.

Besonders bevorzugt kann das Paneel ein Seitenwandpaneel des Aufbaus sein. In Seitenwandpaneelen ist die einfache Verlegung von Leitungen nämlich besonders zweckmäßig, da Seitenwandpaneele besonders häufig mit wenigstens einer Leitung ausgerüstet werden müssen. Das Paneel kann dann vorzugsweise über das wenigstens eine Randprofil mit einem Dachpaneel, einem Stirnwandpaneel, einem Boden und/oder einem Rückwandrahmen verbunden sein. Dies ermöglicht die einfache und schnelle Fertigung des Aufbaus mit einer geringen Anzahl an Bauteilen. Das Randprofil übernimmt dann mehrere Funktionalitäten.

Nachfolgend wird die Erfindung anhand einer lediglich Ausführungsbeispiele darstellenden Zeichnung näher erläutert. In der Zeichnung zeigt
- Fig. 1: ein Nutzfahrzeug mit einem erfindungsgemäßen Aufbau umfassend erfindungsgemäße Paneele in einer perspektivischen Ansicht,
- Fig. 2: eine Detailansicht eines erfindungsgemäßen Paneels aus Fig. 1 in einer Schnittansicht,
- Fig. 3: eine Verbindung des erfindungsgemäßen Paneels aus Fig. 2 mit dem Dach des Aufbaus aus Fig. 1 in einer Schnittansicht und
- Fig. 4: eine Detailansicht eines weiteren erfindungsgemäßen Paneels aus Fig. 1 in einer Schnittansicht.

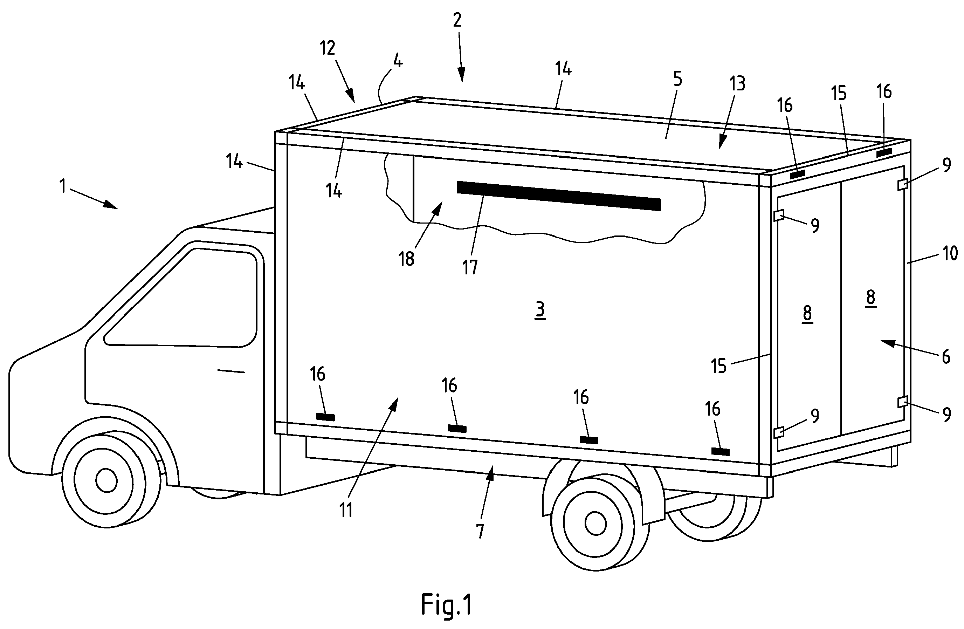

In der Fig. 1 ist ein Nutzfahrzeug 1 in Form eines motorgetriebenen Lastkraftwagens mit einem zulässigen Gesamtgewicht zwischen 3 und 6 Tonnen dargestellt, das einen Aufbau 2 in Form eines Kofferaufbaus aufweist. Der Aufbau 2 weist Seitenwände 3, eine Stirnwand 4, ein Dach 5, eine Rückwand 6 und einen Boden 7 auf. Die Rückwand 6 umfasst dabei zwei Flügeltüren 8, die über Scharniere 9 an einem Rückwandrahmen 10 gehalten sind. Die Seitenwände 3 werden durch Seitenwandpaneele 11 gebildet, die ähnlich aufgebaut sind wie das Stirnwandpaneel 12 zur Bildung der Stirnwand 4 und das Dachpaneel 13 zur Bildung des Dachs 5.

Die einzelnen Paneele 11,12,13 sind über Anbauteile 14 miteinander verbunden, welche Kanten des Aufbaus 2 bilden. Weitere Anbauteile 15, die am hinteren Ende des Aufbaus vorgesehen sind, bilden den Rückwandrahmen 10, an dem die Türen 8 festgelegt sind. Ferner besteht eine Verbindung jeweils zwischen den Seitenwandpaneelen 11 und dem Stirnwandpaneel 12 mit dem Boden 7 des Aufbaus 2. An den Seitenwänden 3 und der Rückwand 6, insbesondere am Rückwandrahmen 10 sind sogenannte Konturleuchten 16 vorgesehen, welche die Erkennbarkeit des Aufbaus 2 und dessen ungefähre Abmessungen auch bei Dunkelheit für andere Verkehrsteilnehmer sicherstellen sollen. Konturleuchten 16 sind Stand der Technik und in verschiedenen Ausgestaltungen am Markt erhältlich. Daher und weil es auf die genaue Ausgestaltung der Konturleuchten 16 vorliegend nicht ankommt, bedarf es vorliegend keiner weiteren Diskussion der Konturleuchten 16 als solche. Neben den Konturleuchten 16 sind ferner Innenraumleuchten 17 zum Beleuchten des Laderaums 18 des Aufbaus 2 vorgesehen. Auch diese Innenraumleuchten 17 sind in vielfacher Ausgestaltung bekannt, wobei es auf die genaue Ausgestaltung der Innenraumleuchten 17 ebenfalls nicht ankommt.

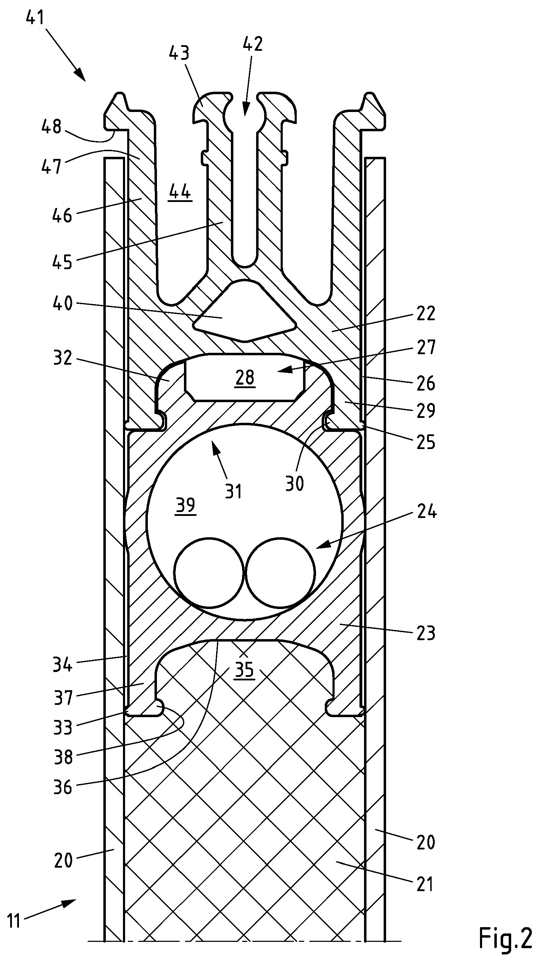

In der Fig. 2 ist ein Detail des Seitenwandpaneels 11 im Bereich eines Randes dargestellt. Das Seitenwandpaneel 11 weist zwei strukturgebende Decklagen 20 auf, die jeweils mehrschichtig aufgebaut sein können, aber jedenfalls eine Strukturlage aus einem Metall oder einem gegebenenfalls faserverstärkten Kunststoff aufweisen. Der Einfachheit halber sind die Decklagen 20 lediglich einschichtig dargestellt, die Decklagen 20 könnten aber bedarfsweise auch aus mehreren Lagen zusammengesetzt sein. Zwischen den Decklagen 20 befindet sich eine Kernlage 21 aus einem geschäumten Kunststoff, insbesondere aus Polyurethan (PU). Andere Paneele 11,12,13 des Aufbaus 2 können grundsätzlich ähnlich oder gleichartig aufgebaut sein.

Wenigstens bei dem dargestellten Seitenwandpaneel 11 ist an wenigstens einer Schmalseite, insbesondere aber an allen umlaufenden Schmalseiten, ein Randprofil 22 vorgesehen. Grundsätzlich kann dies auch oder alternativ bei anderen Paneelen 11,12,13 der Fall sein. Ferner weist das dargestellte Seitenwandpaneel 11 ein Montageprofil 23 auf, um daran die elektrischen Leitungen 24 zur Spannungsversorgung der Konturleuchten 16 und der Innenraumleuchten 17 festzulegen. Dies ist zweckmäßig für die Leitungsführung im Aufbau 2.

Grundsätzlich kann ein Montageprofil 23 alternativ oder zusätzlich auch an einem anderen Paneel 11,12,13, also auch einem Stirnwandpaneel und/oder dem Dachpaneel vorgesehen sein. Vor diesem Hintergrund wird vorliegend allgemein lediglich von dem Paneel 11 gesprochen, auch wenn damit genauer das Seitenwandpaneel 11 gemeint ist. Ferner wird darauf hingewiesen, dass das dargestellte und insoweit bevorzugte Paneel 11, das Randprofil 22 und das Montageprofil 23 jeweils wenigstens im Wesentlichen spiegelsymmetrisch zu einer Ebene parallel zum Paneel aufgebaut sind, weshalb der besseren Übersichtlichkeit halber an einander gegenüberliegenden Seiten vorgesehene Bauteile des Paneels 11, des Randprofils 22 und des Montageprofils 23 teilweise nur einfach Bezugszeichen in der Zeichnung eingetragen worden sind.

Das Randprofil 22 des Paneels 11 grenzt zu beiden Seiten an jeweils einer Decklage 20 an. Beim dargestellten und insoweit bevorzugten Paneel 11 sind die Decklagen 20 mit dem Randprofil verklebt. Dazu weist das Randprofil 22 jeweils eine nach außen weisende Wulst 25 auf, mit der das Randprofil 22 von innen an der jeweils angrenzenden Decklage 20 anliegt und die angrenzend einen Klebespalt 26 zwischen der jeweiligen Decklage 20 und dem Randprofil 22 definiert. Die Klebespalten 26 sind mit einem Klebstoff wenigstens teilweise gefüllt und sorgen so für eine stoffschlüssige Verbindung zwischen dem Randprofil 22 und den Decklagen 20.

Das Randprofil 22 bildet den Abschluss des Paneels 11 nach außen im Bereich der Schmalseite. Das Randprofil 22 erlaubt daher beispielsweise das Ausschäumen des Paneels 11 mit dem geschäumten Kunststoff, nachdem das Randprofil 22 zwischen den Decklagen 20 vorgesehen ist. Der geschäumte Kunststoff kann dann nämlich an der entsprechenden Schmalseite nicht mehr nach außen dringen. Außerdem schützt das Randprofil 22 des Paneels 11 die Kernlage 21, insbesondere vor dem Eindringen von Feuchtigkeit. Das Randprofil 22 weist der Kernlage 21 zugewandt eine Aufnahme 27 in Form eines Nutprofils 28 auf. An jeder Nutflanke 29 des Randprofils 22 ist zudem eine Rippe 30 vorgesehen, die etwas in das Nutprofil 28 hineinragen und in einer Richtung parallel zu den Decklagen 20 und senkrecht zum Randprofil 22 gesehen eine Hinterschneidung bilden.

An der in Richtung der Kernlage 21 weisenden Seite des Randprofils 22 greift das Montageprofil mit einem Federprofil 31 in das Nutprofil 28 des Randprofils 22 ein. An dem Federprofil 31 sind zum formschlüssigen Verriegeln des Federprofils 31 mit dem Nutprofil 28 nach außen weisende, die Rippen 30 des Nutprofils 28 hintergreifende Rippen 32 vorgesehen. Das Randprofil 22 und das Montageprofil 23 sind folglich formschlüssig verbunden, insbesondere verrastet. Zwischen dem Randprofil 22 und dem Montageprofil 23 besteht anders ausgedrückt eine formschlüssige Rastverbindung in Form einer Nut/Feder-Verbindung.

Das Montageprofil weist zudem ebenfalls nach außen weisende Wülste 33 auf, die jeweils einen Klebespalt 34 zur Aufnahme von Klebstoff definieren, um das Montageprofil 23 stoffschlüssig mit den Decklagen 20 zu verkleben. Das Montageprofil 23 weist der Kernlage 21 zugewandt zudem eine Aufnahme 35 in Form eines Nutprofils 36 auf. An jeder Nutflanke 37 des Nutprofils 36 des Montageprofils 23 ist weiter eine Rippe 38 vorgesehen, die etwas in das Nutprofil 36 hineinragt und in einer Richtung parallel zu den Decklagen 20 und senkrecht zum Randprofil 22 gesehen eine Hinterschneidung bildet.

Das Nutprofil 28 und das Federprofil 31 der Verbindung zwischen dem Randprofil 22 und dem Montageprofil 23 sind korrespondierend zueinander ausgebildet. Das Montageprofil weist an der dem Federprofil 31 abgewandten Seite zudem ein Nutprofil 36 auf, das einerseits korrespondierend mit dem Federprofil 31 der gegenüberliegenden Seite des Montageprofils 23 und andererseits wenigstens gleichartig zu dem Nutprofil 28 des Randprofils 22 ausgebildet ist. Dies führt dazu, dass gleichartige Montageprofile 23 der dargestellten Art untereinander über eine Nut/Feder-Verbindung verbunden werden können. Die Nut/Feder-Verbindung ist dann analog ausgebildet wie die Nut/Feder-Verbindung zwischen dem Randprofil 22 und dem Montageprofil 23.

Bedarfsweise könnte vorliegend das Randprofil 22 auch ein Federprofil aufweisen, das dem Federprofil 31 des Montageprofils 23 entspricht. Dann würde das Montageprofil 23 lediglich andersherum mit dem Randprofil 22 über eine Nut/Feder-Verbindung verbunden werden.

Bei dem dargestellten und insoweit bevorzugten Paneel 11 erlauben die dargestellte Ausrichtung des Montageprofils 23 und die Ausgestaltung des Randprofils 22, dass das Montageprofil 23 mit einem Nutprofil 36 an die Kernlage 21 angrenzt. Gleiches gilt für das Randprofil 22, wenn kein Montageprofil 23 vorgesehen ist. Beim Ausschäumen des Paneels 11, also des zwischen den Decklagen 20 verbleibenden Raums wenigstens zu einem Großteil, kann der ausschäumende Kunststoff in das Nutprofil 36 des Montageprofils 23 oder das Nutprofil 28 des Randprofils 22 eindringen. Das entsprechende Nutprofil 28,36 bildet dann eine Aufnahme 27,35 für einen Teil des ausschäumenden Kunststoffs, der folglich teilweise in der Aufnahme 27,35, respektive des Nutprofils 28,36, aushärtet und dabei die von den an den Nutflanken 29,37 vorgesehenen Rippen 30,38 gebildeten Hinterschneidungen hintergreifen kann. Auf diese Weise bildet sich ein Formschluss zwischen dem geschäumten Kunststoff der Kernlage 21 einerseits und dem Randprofil 22 oder dem Montageprofil 23 andererseits.

Zwischen dem Federprofil 31 und dem Nutprofil 36 ist bei dem Montageprofil 23 ein Kanal 39 vorgesehen, der beim dargestellten und insoweit bevorzugten Montageprofil 23 geschlossen ist und sich in Längsrichtung des Montageprofils 23 erstreckt, und zwar vorliegend über wenigstens im Wesentlichen gesamte Länge des Montageprofils 23, das beim dargestellten und insoweit bevorzugten Paneel 11 über wenigstens im Wesentlichen die gesamte Länge der Schmalseite und über wenigstens im Wesentlichen die gesamte Länge des Randprofils 22 vorgesehen ist. Durch den Kanal 39 sind elektrische Leitungen 24 zur Spannungsversorgung der Konturleuchten 16 und der Innenraumleuchten 17 verlegt. In dem Kanal 39 sind die elektrischen Leitungen 24 vor äußeren Einwirkungen geschützt. Außerdem können bedarfsweise einfach elektrische Leitungen 24 nachgerüstet oder ausgetauscht werden.

Das Randprofil 22 weist ferner noch einen Entlüftungskanal 40 auf, über den die beim Ausschäumen des Paneels 11 zwischen den Decklagen 20 verdrängte Luft nach außen abgeleitet werden kann, sofern durch wenigstens eine entsprechende Öffnung Sorge dafür getragen wird, dass die durch den ausschäumenden Kunststoff verdrängte Luft aus dem Raum zwischen den Decklagen 20 während des Ausschäumens des Kunststoffs in den Entlüftungskanal 40 des Randprofils 22 gelangen kann. Das Randprofil 22 weist an der der Kernlage 21 abgewandten Seite zudem ein Verbindungprofil 41 auf, das mit korrespondierenden Verbindungsprofilen 57 verbunden werden kann, um auf diese Weise den Aufbau 2 zu bilden. Das Verbindungsprofil 41 als Teil des Randprofils 22 weist eine zentrale Feder 42 auf, die nach außen gerichtete Rastvorsprünge 43 aufweist und beim dargestellten und insoweit bevorzugten Paneel 11 in spreizbarer Weise zweigeteilt ist. Zu beiden Seiten der zentralen Feder 42 ist eine Nut 44 vorgesehen, deren innere Nutflanke 45 durch die zentrale Feder 42 gebildet wird. Die jeweils äußere Nutflanke 46 wird wiederum durch eine Feder 47 gebildet, die teilweise mit der Decklage 20 überlappt und wenigstens teilweise mit der Feder 47 verbunden ist, und zwar über den bereits beschriebenen Klebespalt 26. Die äußeren Federn 47 weisen zudem in Richtung der Decklagen 20 gerichtete Anschläge 48 auf, die mit der Decklage 20 in Anschlag kommen können, um zu vermeiden, dass das Randprofil 22 zu weit zwischen die Decklagen 20 gelangt.

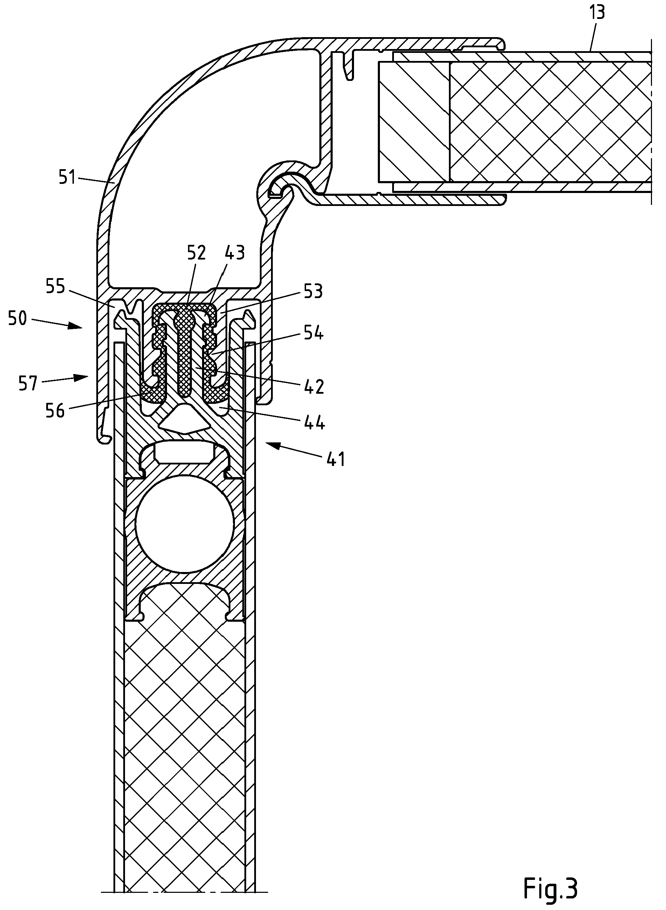

In der Fig. 3 ist eine Verbindung 50 des Paneels 11 mit einem Anbauteil 51 dargestellt, das den Anschluss an das Dachpaneel 13 über Eck herstellt und daher an einem Ende mit dem Dachpaneel 13 verbunden ist. Die Verbindung 50 zwischen dem Paneel 11, bei dem es sich um das Seitenwandpaneel 11 handelt, und dem Stirnwandpaneel 12 ist analog aufgebaut und bedarf daher vorliegend keiner separaten Erläuterung. Auch der Boden 7 ist in ähnlicher Weise mit dem Paneel 11 verbunden. Die Verbindung mit dem Rückwandrahmen kann dabei auch eine Nut/Feder-Verbindung aufweisen, wie sie in der Fig. 3 dargestellt ist. Andere Arten von Verbindungen sind jedoch grundsätzlich ebenfalls denkbar.

Bei der Nut/Feder-Verbindung 50, die aus zwei korrespondierenden ineinander geschobenen Verbindungsprofilen 41,57 des Paneels 11 und des Anbauteils 51 gebildet wird, greift die zentrale Feder 42 in eine korrespondierende zentrale Nut 52, die an ihren Nutflanken 53 nach innen gerichtete Rastvorsprünge 54 aufweist, die bedarfsweise mit den Rastvorsprüngen 43 der zentralen Feder 42 zusammenwirken, um eine Rastverbindung bereitzustellen. Die Nutflanken 53 der zentralen Nut 52 greifen ferner federähnlich in die Nuten 44 des korrespondierenden Verbindungsprofils 41 des Paneels 11 ein. Gleichfalls bilden die Nutflanken 53 der zentralen Nut 52 die inneren Nutflanken 53 äußerer Nuten 55 des Verbindungsprofils 57 des Anbauteils 51, in die die äußeren Federn 47 des Verbindungsprofils 41 des Paneels 11 eingreifen und die die Decklagen 20 des Paneels 11 auf ihren Außenseiten randseitig umgreifen. Die dargestellte und insoweit bevorzugte Nut/Feder-Verbindung 50 der Verbindungsprofile 41,57 zwischen dem Randprofil 22 einerseits und dem Anbauteil 51 andererseits ist auch stoffschlüssig gefügt, durch einen Klebstoff 56, der wenigstens teilweise zwischen den Verbindungsprofilen 41,57 vorgesehen ist.

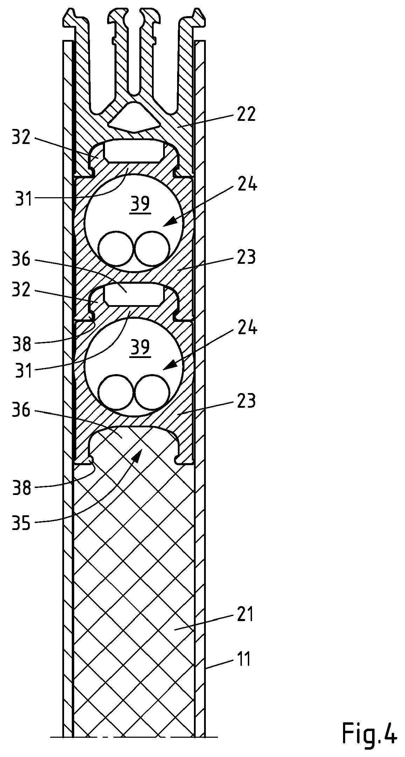

In der Fig. 4 ist ein weiteres Paneel 11 in Form eines Seitenwandpaneels 11 in einer Detailansicht dargestellt. Das Paneel 11 ist dabei grundsätzlich analog zu dem in der Fig. 2 dargestellten Paneel 11 aufgebaut, weshalb gleiche Bauteile auch mit gleichen Bezugszeichen versehen sind. Im Unterschied zu dem Paneel 11 der Fig. 2 weist das Paneel 11 der Fig. 4 jedoch zwei Montageprofile 23 auf, die analog zu dem Montageprofil 23 der Fig. 2 ausgebildet sind. Ein Montageprofil 23 ist dabei formschlüssig über eine Nut/Feder-Verbindung mit dem Randprofil 22 der zugehörigen Schmalseite verbunden, wie dies bereits im Zusammenhang mit der Fig. 2 erläutert worden ist. Die zwei Montageprofile weisen in ihren Kanälen 27 jeweils zwei elektrische Leitungen 24 auf.

Allerdings ist gemäß der Fig. 4 in dem Nutprofil 36 des direkt mit dem Randprofil 22 verbundenen Montageprofils 23 kein geschäumter Kunststoff der Kernlage 21 vorgesehen. Vielmehr ist in dem entsprechenden Nutprofil 36 das Federprofil 31 des weiteren Montageprofils 23 aufgenommen, und zwar formschlüssig im Sinne einer Nut/Feder-Verbindung. Da die Montageprofile 23 gleichartig ausgebildet sind und jeweils miteinander korrespondierende Nutprofile 36 und Federprofile 31 aufweisen, können die Montageprofile 23 untereinander ebenso verbunden werden wie mit einem Randprofil 22. Mithin entsprecht die Verbindung zwischen den Montageprofilen 23 der Verbindung zwischen einem der Montageprofile 23 und dem Randprofil 22. Das Federprofil 31 des einen Montageprofils 23 wird mit seinen Rastvorsprüngen 32 beim Einschieben in das Nutprofil 36 des angrenzenden Montageprofils 23 mit den Rastvorsprüngen 38 des Nutprofils 36 verrastet, wonach sich die Rastvorsprünge 32,38 formschlüssig hintergreifen.

Das freie Nutprofil 36 des indirekt mit dem Randprofil 22 verbundenen Montageprofils 23 bildet eine Aufnahme 35 zur Aufnahme von geschäumtem Kunststoff der Kernlage 21, der in das Nutprofil 36 eingreift und dabei die nach innen gerichteten Rastvorsprünge 38 des Nutprofils 36 hintergreift. Zwischen dem endständigen Montageprofil 23 und der Kernlage 21 besteht daher eine formschlüssige Verbindung. Auch wenn dies nicht dargestellt ist, so versteht sich, dass in einem Paneel auch mehr als zwei Montageelemente untereinander sowie gemeinsam mit dem Randprofil einer Schmalseite des Paneels verbunden sein können.

## Patentansprüche

1. Paneel (11) für einen Aufbau (2) eines Nutzfahrzeugs, insbesondere Lastkraftwagens, Anhängers oder Sattelaufliegers, mit zwei Decklagen (20) und einer dazwischen vorgesehenen Kernlage (21), wobei an wenigstens einer Schmalseite des Paneels (11) ein sich in Längsrichtung der Schmalseite erstreckendes Randprofil (22) vorgesehen ist,
**dadurch gekennzeichnet, dass**
auf der der Kernlage (21) zugewandten Seite des Randprofils (22) ein Montageprofil (23) zur Montage wenigstens einer, vorzugsweise elektrischen, Leitung (24) im Paneel (11) mit dem Randprofil (22) verbunden ist.

2. Paneel nach Anspruch 1,
**dadurch gekennzeichnet, dass**
das Montageprofil (23) zwischen den Längsenden des Montageprofils (23) wenigstens einen wenigstens im Wesentlichen geschlossenen und sich in Längsrichtung des Montageprofils (23) erstreckenden Kanal (39) zur Aufnahme wenigstens einer, vorzugsweise elektrischen, Leitung (24) aufweist.

3. Paneel nach Anspruch 1 oder 2,
**dadurch gekennzeichnet, dass**
das Montageprofil (23) formschlüssig, stoffschlüssig, insbesondere durch Verkleben oder Verschweißen, und/oder kraftschlüssig, insbesondere durch Verschrauben, mit dem Randprofil (22) verbunden ist und, vorzugsweise, dass das Montageprofil (23) durch eine Nut/Feder-Verbindung, durch eine Rastverbindung und/oder stoffschlüssig mit dem Randprofil (22) verbunden ist.

4. Paneel nach einem der Ansprüche 1 bis 3,
**dadurch gekennzeichnet, dass**
das Montageprofil (23) an einer Längsseite ein Federprofil (31) und auf der gegenüberliegenden Längsseite ein mit dem Federprofil (31) derart korrespondierendes Nutprofil (36) aufweist, so dass gleichartige Montageprofile (23) jeweils über ein Federprofil (31) und ein Nutprofil (36) unter Ausbildung einer Nut/Feder-Verbindung verbindbar sind und, vorzugsweise, dass das Randprofil (22) und das Montageprofil (23) jeweils an einer Längsseite gleichartige Federprofile oder gleichartige Nutprofile (28,36) aufweisen.

5. Paneel nach einem der Ansprüche 1 bis 4,
**dadurch gekennzeichnet, dass**
das mit dem Randprofil (22) formschlüssig verbundene Montageprofil (23) auf der dem Randprofil (22) abgewandten Längsseite formschlüssig mit einem weiteren Montageprofil (23) verbunden ist und, vorzugsweise, dass die Montageprofile (23) wenigstens im Wesentlichen gleichartig ausgebildet sind.

6. Paneel nach Anspruch 5,
**dadurch gekennzeichnet, dass**
einerseits die beiden Montageprofile (23) und andererseits das Randprofil (22) mit dem angrenzenden Montageprofil (23) über wenigstens im Wesentlichen gleichartige Verbindungen, insbesondere Nut/Feder-Verbindungen, Rastverbindungen und/oder stoffschlüssige Verbindungen, verbunden sind.

7. Paneel nach einem der Ansprüche 1 bis 6,
**dadurch gekennzeichnet, dass**
die Kernlage (21) aus einem geschäumten Kunststoff gebildet ist und, vorzugsweise, dass der geschäumte Kunststoff der Kernlage (21) sich bis in eine Aufnahme (35), insbesondere in ein Nutprofil (36), des an die Kernlage (31) angrenzenden Montageprofils (23) erstreckt und in der Aufnahme (35) wenigstens eine Hinterschneidung des Montageprofils (23) in einer Richtung senkrecht zum Montageprofil (23) formschlüssig hintergreift.

8. Paneel nach einem der Ansprüche 1 bis 7,
**dadurch gekennzeichnet, dass**
das Randprofil (22) mit den Decklagen (20) stoffschlüssige verbunden, insbesondere verklebt, ist.

9. Paneel nach einem der Ansprüche 1 bis 8,
**dadurch gekennzeichnet, dass**
das Randprofil (22) und/oder das Montageprofil (23) aus Kunststoff, insbesondere aus Polyvinylchlorid (PVC), vorzugsweise als Extrusionsprofil, gebildet ist und/oder wenigstens eine Decklage (20) eine Strukturlage aus einem Metall, vorzugsweise Stahl oder Aluminium, oder aus einem Kunststoff, vorzugsweise faserverstärktem Kunststoff, aufweist.

10. Paneel nach einem der Ansprüche 1 bis 9,
**dadurch gekennzeichnet, dass**
das Randprofil (22) als Verbindungsprofil (41) zur Bildung einer formschlüssigen Verbindung (50), Rastverbindung und/oder stoffschlüssigen Verbindung, insbesondere mit einem korrespondierenden Verbindungsprofil (57) eines weiteren Paneels (13) und/oder Anbauteils (51) ausgebildet ist.

11. Paneel nach Anspruch 10,
**dadurch gekennzeichnet, dass**
das Randprofil (22) wenigstens zwei Nuten (44) und wenigstens eine Feder (42) zur Verbindung mit einem korrespondierenden Verbindungsprofil (57) aufweist und/oder dass das Randprofil (22) wenigstens einen Rastvorsprung (43) zum Verrasten mit einem korrespondierenden Verbindungsprofil (57) aufweist.

12. Paneel nach einem der Ansprüche 1 bis 11,
**dadurch gekennzeichnet, dass**
das Randprofil (22) und/oder das Montageprofil (23) wenigstens eine Aufnahme (27,35) und/oder ein Federprofil (31) mit wenigstens einem Rastvorsprung (30,32,38) zum formschlüssigen Hintergreifen eines Rastvorsprungs (30,38) eines Montageprofils (23) und/oder des Randprofils (22) in einer Richtung senkrecht zum Randprofil (22) und/oder Montageprofil (23) aufweist und, vorzugsweise, dass zwei seitliche Rastvorsprünge (30,32,38) in einer Aufnahme (27,35) und/oder an einem Federprofil (31) vorgesehen sind.

13. Aufbau (2) eines Nutzfahrzeugs, insbesondere Lastkraftwagens, Anhängers oder Sattelaufliegers, mit wenigstens einem Paneel (11), vorzugsweise nach einem der Ansprüche 1 bis 12, umfassend zwei Decklagen (20) und einer dazwischen vorgesehenen Kernlage (21), wobei an wenigstens einer Schmalseite des wenigstens einen Paneels (11) ein sich in Längsrichtung der Schmalseite erstreckendes Randprofil (22) vorgesehen ist,
**dadurch gekennzeichnet, dass**
auf der der Kernlage (21) zugewandten Seite des Randprofils ein Montageprofil (23) zur Montage wenigstens einer, vorzugsweise elektrischen, Leitung (24) im Paneel (11) mit dem Randprofil (22) verbunden ist und dass das Randprofil (22) mit einem weiteren Paneel (12,13) und/oder einem Anbauteil (51) des Aufbaus (2) verbunden ist.

14. Aufbau nach Anspruch 13,
**dadurch gekennzeichnet, dass**
das Randprofil (22) durch eine formschlüssige Verbindung eine Rastverbindung und/oder über eine stoffschlüssige Verbindung mit dem weiteren Paneel (12,13) und/oder dem Anbauteil (51) verbunden ist.

15. Aufbau nach Anspruch 13 oder 14,
**dadurch gekennzeichnet, dass**
das Paneel (11) ein Seitenwandpaneel des Aufbaus (2) ist und, vorzugsweise, dass das Paneel (11) über das wenigstens eine Randprofil (22) mit einem Dachpaneel (13), einem Stirnwandpaneel (12), einem Boden (7) und/oder einem Rückwandrahmen (10) verbunden ist.
